# EUROPEAN PATENT APPLICATION

(11) **EP 1 655 936 A1**
(43) Date of publication of application: **10.05.2006**
(21) Application number: 04425819.2
(22) Date of filing: 03.11.2004
(51) Int. Cl.: H04M 7/00, H04M 3/22

(54) **Telecommunication system and method for data/phone transmission**

(71) Applicant: Misarc Micro Systems Architecturing S.r.l., I-20041 Agrate Brianza (Milano) (IT)
(72) Inventor: Bartolommei, Bruno, 20126 Milano (IT); Gallenda, Fulvio, 20126 Milano (IT)
(74) Representative: Ferrari, Barbara

(57) **Abstract**

The invention describes a telecommunication system for data/phone transmission within local or private geographic networks (S1, S2) connected to a data network (2) through local interconnections comprising telephone apparatuses (PBX, telephones, ...) and router devices.

Advantageously, the system also comprises at least one data/phone interface network (31), inserted between the local interconnections and including a plurality of interface devices (VTC) associated with each local or private geographic network (S1, S2) and connected between the telephone apparatuses (PBX, telephones, ...) and at least one of the local interconnections to configure and manage the telecommunication system.

## Description

### Field of application

The present invention refers, in general, to the field of telecommunications and, in particular, it concerns a telecommunication system for data/phone transmission.

More in particular, the invention concerns a telecommunication system for data/phone transmission within local or private geographical networks connected to a data network through local or geographical interconnections comprising telephone apparatuses (PBX, telephones, etc.) and router devices.

In particular, but not exclusively, the invention concerns data/phone transmission for company telecommunications and the following description is made with reference to this specific field of application with the sole purpose of simplifying its presentation.

### Prior art

Currently, the overwhelming majority of company telecommunications take place by means of the conventional telephone network as far as voice communications are concerned, and by means of the internet as far as data communication is concerned (sending of data files, images, databases, etc.).

Such two networks are mainly separate from each other both for technological reasons (they transport information of different types) and for commercial reasons (they are managed by different companies). Hereafter in the description we shall refer to the telephone network and to the data network to indicate such networks, respectively.

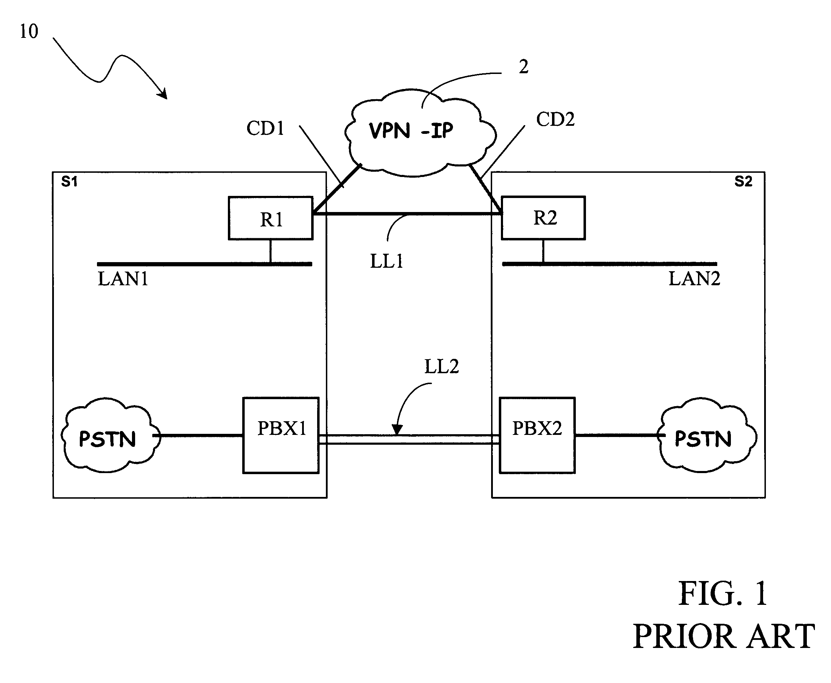

An example of a data/phone telecommunication system between a first company seat of business S1 and a second company seat of business S 1 is schematically shown in figure 1 and globally indicated with 10.

The telecommunication system 10 comprises, in particular, such first and second company seats of business S1, S2, possibly connected together through a first connection LL1 and a second connection LL2 (so-called "Leased Line"), each seat of business also being connected to a data network 2, such as the IP Internet or a Virtual Private Network (VPN), through suitable digital connections CD.

As shown in such figure, each company seat of business S1, S2 comprises a Private Branch Exchange (PBX) connected to the Public Switched Telephone Network (PSTN), as well as a Local Area Network (LAN) connected, through a router R, to the data network 2. In the figures, elements corresponding to different company seats of business have been indicated with the same acronym followed by a reference number (1, 2,...) corresponding to the different seats of business .

Moreover, the routers R1 and R2 of the company seats of business S 1 and S2 can be connected together through the first connection LL1, whereas the Private Branch Exchanges PBX1 and PBX2 can be connected together through the second connection LL2.

Substantially, the company seats of business have local data/phone structures and communicate with each other through public connections (PSTN for telephone and VPN-IP for data), or else through private connections (connections LL1 and LL2).

It should be noted that each additional seat of business must provide an analogous structure, equipping itself with its own local data/phone structure and take care of wiring with the public connections and of realising suitable private connections with all of the other company seat of business. As it can be easily imagined, all these configuration and wiring operations are extremely expensive for the company.

With the evolution of digital technologies and the spread of data networks the convergence of the two networks (telephone and data) becomes more and more favourable and in particular the prior art provides an integration of the conventional telephony with the Voice over Internet Protocol (hereafter indicated as VoIP telephony, distinguishing it from conventional telephony).

In fact, the use of suitable hardware/software apparatuses is known to establish voice communications using the data network.

The advantage of such an approach is substantially due to the fact that the additional cost of managing a data network further to the increase in traffic introduced by the transportation of the VoIP telephony is extremely low, since the transportation of the VoIP telephony requires much less information than normal data traffic (sending of data files, images, databases, etc.).

The drawbacks are mainly due to the lower capillarity of the data network with respect to the telephone network, to the sound quality that is influenced by the busyness of the data network, and to the partial incompatibility between the communication apparatuses in the two networks, data and telephone one, which can intercommunicate only through suitable gateways. Some gateways can be added to the network that already exists whereas other products replace existing Private Branch Exchanges PBX (they are the so-called IP-PBX exchanges).

In reality, the advantages of the VoIP telephony tend to increase since the introduction of new technologies (ADSL, optical fibres, etc.) make the management cost of data networks more and more competitive, whereas the drawbacks tend to decrease since the technical limitations are overcome by new technologies and an increasing number of low-cost gateway apparatuses are developed.

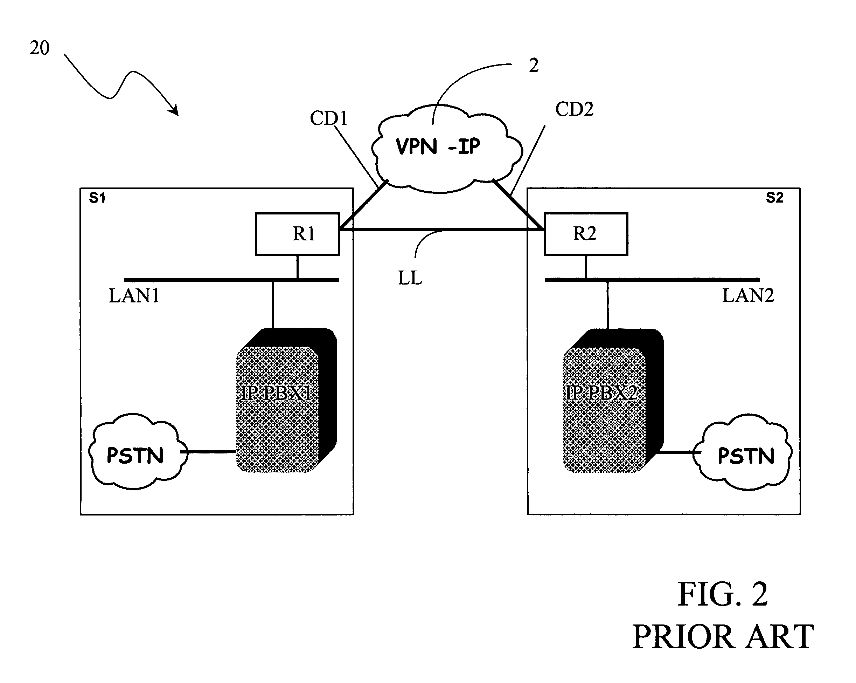

In figure 2 a telecommunication system for data/phone transmission between a first company seat of business S1 and a second company seat of business S2 is schematically illustrated and globally indicated with 20.

The telecommunication system 20 comprises, in particular, such first and second company seat of business S1, S2, connected to a data network 2, such as the Internet IP or a VPN network, through suitable digital connections CD. Moreover, the two seat of business can be connected, also or exclusively, through a single connection LL.

In this case, each company seat of business S1, S2 comprises an integrated voice communication management system on IP PBX data network connected to the Public Switched Telephone Network PSTN and to the Local Area Network LAN, in turn connected, through the router, to the data network 2.

Also in such case, the routers R1 and R2 of the company seatsof business S1 and S2 can be connected together through the single connection LL.

However, a fundamental point keeps and tends to slow down the passage from the conventional telephony to the VoIP telephony on data network. Such point consists of the investment cost made to install conventional telephone apparatuses, such as telephones themselves and exchanges, which would be made obsolete by the introduction of the new communication system on data network.

Therefore, one of the main problems to be solved currently is the possibility of introducing the use of new communication technologies on data network, which allows a reduction of the communication costs, and, at the same time, allows a compatible interaction with conventional telephone apparatuses to be maintained, which would ensure that the investments made in buying telephone apparatuses are safeguarded and that the transition between the two technologies is gradual.

The market currently proposes various adaptor devices that substantially carry out the functions of a gateway between the conventional telephone world and the VoIP telephony world. Such gateway devices are connected between a conventional telephone exchange (or even a simple telephone) and a router device for connection to the Internet or to a VPN network.

The various devices, whilst providing functionally similar performance, have a wide variety of characteristics and differ from one another above all in the number and types of interfaces, types of sound compression supported and signalling protocols used.

In particular, as far as the interfaces are concerned, there are mainly three types:
analogue interfaces (FXS or FXO)
basic access ISDN interfaces
primary access ISDN interfaces

Moreover, the compression types supported are generally based upon International Telecommunication Union ITU-T standards. In particular standards G711, G729, G723, etc., were created to make the sound flows coming from different sources compatible. Different producers can use non-standard compression protocols.

The signalling protocols are those that most distinguish the various products currently on sale, since there are both proprietary protocol and standard protocol. For the latter, in particular, two different standards are used: standard H323 based upon ITU-T specifications and standard SIP based upon IETF (Internet Engineering Task Force) specifications. Currently, SIP protocol is the most common due to simplicity of implementation, even if it has worse qualitative characteristics with respect to protocol H323.

Known gateway devices are used to carry out transmission on data networks of data signals, thus digital, or of sound signals suitably converted into digital data signals by the gateway device itself.

The data and sound communication between different seat of business of a company is, however, managed through an Internet or VPN connection, the correct reception of such communications being ensured by the international standards applied.

In such a case, the company must take care of the connection of the gateway devices installed in it with the Internet or VPN network. Moreover, the maintenance and updating of the conversion and transmission programmes contained in such devices must be carried out in a capillary manner and as much as possible simultaneously between the different seat of business , so as to maintain the compatibility between the gateway devices themselves and therefore to allow data and/or phone transmission between the different seat of business.

The adoption of such communication protocols that, whilst having to maintain compatibility with the de facto standards, must also ensure easy implementation of VoIP telephony on data networks and the complete transparency of signalling between the different apparatuses of the communication system is a crucial point for a transition from conventional telephone communication to VoIP telephony.

The problem forming the basis of the present invention is that of making a telecommunication system having structural and functional characteristics such as to ease a convergence from conventional telephone communication to VoIP telephony with the consequent decrease in operating costs and at the same time ensuring that a compatible interaction with the conventional telephone communication devices already installed in company seat of business is maintained.

### Summary of the invention

The solution idea forming the basis of the present invention is that of providing a plurality of devices that carry out the conversion functions between the two telephone systems, conventional and VoIP, and a suitable management module of these devices, making a communication structure capable of evolving in time and of satisfying both current requirements, and future ones.

Based upon such a solution idea the technical problem is solved by a telecommunication system of the type indicated previously and defined by the characterising part of claim 1.

The problem is also solved by a management method of the connection within a local or private geographic network of the type indicated previously and defined by the characterising part of claim 12.

The characteristics and advantages of the telecommunication system and of the management method according to the invention shall become clearer from the following description of an example embodiment thereof, made for indicating and not limiting purposes, with reference to the attached drawings.

### Brief description of the drawings

Figure 1 schematically shows a telecommunication system between a first and a second company seat of business made according to the prior art.
Figure 2 schematically shows a variant embodiment of a telecommunication system between a first and a second company seat of business made according to the prior art.
Figure 3 schematically shows a telecommunication system between a first and a second company seat of business made according to the invention.
Figure 4 schematically shows a first variant embodiment of the telecommunication system according to the invention.
Figure 5 schematically shows a second variant embodiment of the telecommunication system according to the invention.
Figure 6 schematically shows a third variant embodiment of the telecommunication system according to the invention.

### Detailed description

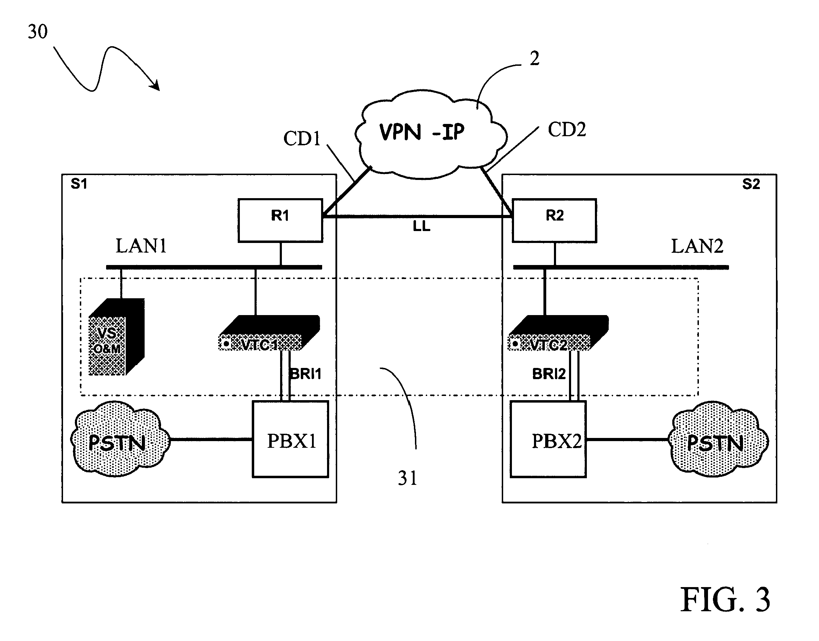

With reference to such figures, and in particular to the example of figure 3, a telecommunication system made according to the invention is wholly and schematically indicated with 30.

In particular, the telecommunication system 30 is illustrated just as an example and not for limiting purposes with reference to the transmission between different company seat of business. In general, it is possible to make the telecommunication system 30 to connect a plurality of local telephone networks, connected to a Public Switched Telephone Network (PSTN) as well as to data networks 2, such as the internet or a VPN network and possibly equipped with conventional telephone apparatuses such as actual telephones and exchanges.

As stated previously, corresponding elements in the different company seat of business have been indicated with the same acronym followed by a reference numeral (1, 2...) corresponding to the different seat of business .

The telecommunication system 30 illustrated in figure 3 comprises a first company seat of business S1 and a second company seat of business S2 each seat of business being connected to a data network 2, such as the internet IP or a VPN network, through suitable digital connections CD. The transmission can also or exclusively take place through a single connection LL.

As seen in relation to the prior art, each company seat of business S1, S2 comprises a Private Branch Exchange PBX, connected to a Public Switched Telephone Network (PSTN), as well as a LAN network or a geographic WAN network. In particular, as an example, in figure 3 a LAN network is shown connected, through a router R, to the data network 2. The Private Branch Exchanges PBX and the routers R represent local interconnections, respectively, to the public telephone network and to the data network 2.

Moreover, the routers R1 and R2 of the company seat of business S1 and S2 can be connected together through the aforementioned single connection LL.

An analogous structure can be foreseen in the case of transmission to a geographic WAN network.

Advantageously, according to the invention, the telecommunication system 30 comprises a data/phone interface network 31, connected between the Private Branch Exchanges PBX and the local LAN or geographical WAN/internet networks.

In particular, such a data/phone interface network 31 comprises, in each seat of business , a plurality of Voice TransCoder (VTC) interface device, associated with the local LAN, WAN or internet network and connected between the Private Branch Exchange PBX and the local LAN, WAN or internet network.

Moreover, the data/phone interface network 31 comprises a Voice Server - Operation & Maintenance (VS-OM) management module of the plurality of Interface devices VTC, in turn foreseen at a company seat of business , in the illustrated example in the first company seat of business S1, and connected to a local network, in the illustrated example the local network LAN 1.

In particular, the Interface devices VTC allow the data connection to be exploited for the telephone-type transmission, keeping the previous installation (like the Private Branch Exchanges PBX) that continues to carry out its functions, in particular as far as the local connections within each seat of business are concerned.

In such a way, advantageously according to the invention, the data/phone interface network 31 allows complete compatibility between the additional Interface devices VTC and the conventional telephone apparatuses to be maintained, increasing the overall functionalities of the telecommunication system 30 and introducing new services.

In particular, the Interface devices VTC implement the functions of conversion of a conventional phone signal coming out from the Private Branch Exchange PBX into a Voice over IP type phone signal able to be transported by the data network 2. The main characteristics of such Interface devices VTC are the following:
interface to the LAN network, for example through a conventional connection of the Ethernet 10 Base T or 100 Base T type;
conversion of the conventional phone signal (digital or analogue) into a Voice Over IP type phone signal and vice-versa, for example through the use of standardised algorithms, as seen in relation to the prior art;
conversion of conventional telephone signalling messages into signalling messages through proprietary protocol to messages on IP network and vice-versa.

In other words, the Interface devices VTC allow direct passage of the data signals towards the data network 2 and carry out a suitable conversion of the phone or signalling signals to allow the passage towards the data network 2 itself.

Moreover, advantageously according to the invention, the VS-OM management module carries out two basic functions for the management of the entire telecommunication system 30:
the initial configuration of the Interface devices VTC of the data/phone interface network 31 based upon the number and type of devices used; as well as
the maintaining in operation of the data/ phone interface network 31, in particular in the case of configurations with a large number of Interface devices VTC.

In particular, such a VS-OM management module implements a management method for the configuration and maintenance of a data/phone interface network 31 of a telecommunication system 30 essentially comprising the steps of:
configuration of the Interface devices VTC of the data/phone interface network 31; and
management of the maintenance within the telecommunication system 30;

Advantageously, according to the invention, the configuration step foresees the following steps:
initialisation of the base software of the Interface devices VTC and of a VS-CH routing module of the communications within the data/phone interface network 31, better illustrated hereafter in the description;
collection of the setup parameters of the Interface devices VTC and of the VS-CH module;
definition of the connections between the various Interface devices VTC and of the VS-CH module and the conventional telephone connection apparatuses;
configuration of the Interface devices VTC and of the VS-CS module.

Moreover, advantageously according to the invention, the management step comprises the following steps:
collection of the alarm signalling of the network Interface VTC and VS-CH devices;
modification of the operating status of the network Interface VTC and VS-CH devices (in working order, out of operation for maintenance, under testing, etc.);
dynamic insertion and removal of network Interface devices VTC in the data/phone interface network 31;
collection of statistical information on the parameters of the telecommunication system 30 (number of connections/minute, average conversation length, etc.);
collection of traffic records information from VS-CH (start of call, number of dialler/receiver, conversation length, etc.).

Advantageously, the management method according to the invention can also foresee the steps of:
updating the software of the Interface VTC and VS-CH devices;
updating the configuration of the Interface devices VTC and of the network VS-CH module based upon the setup and/or operating parameters collected.

Advantageously, according to the invention, the telecommunication system 30 foresees both the use of proprietary type protocol and of standard type protocol according to the evolution of the network architecture itself.

In particular, for the signalling functions within a seat of business and therefore within a local network, a proprietary protocol is used that simplifies the implementation of the data/phone interface network 31 and also allows, at least in particular configurations, the complete transparency of signalling between the different telephone apparatuses, a thing that cannot be supported by standard protocols especially in the case of proprietary type signalling (like for example the well known Cornet protocol).

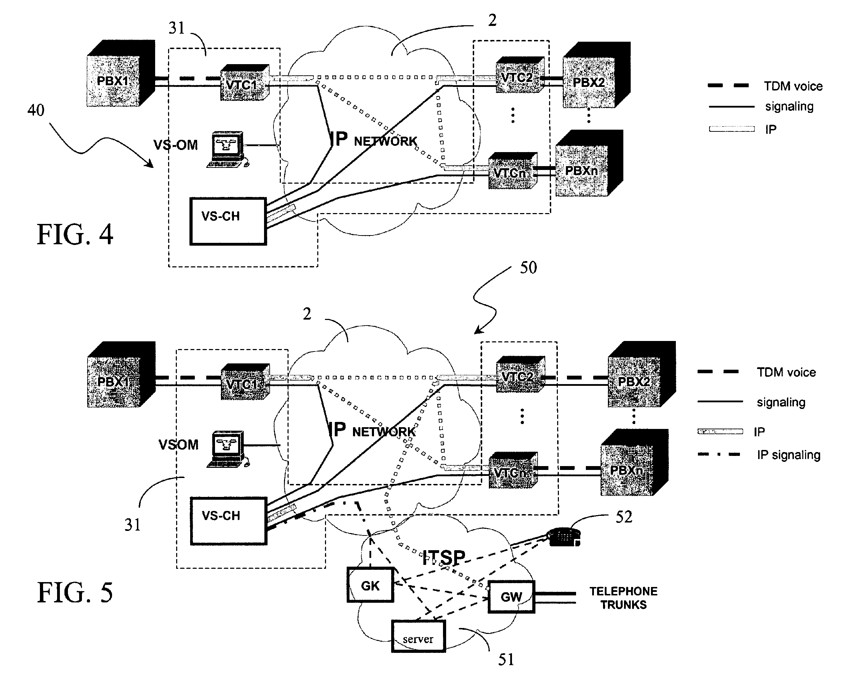

On the other hand, in the case of transmission outside the local network and on the data network 2, the protocols used are of the standard type. In particular, the standard protocols are maintained towards the telephone and data apparatuses already installed. Figure 4 shows a variant embodiment of the telecommunication system according to the invention, wholly indicated with 40. In the illustrated example, the telecommunication system 40 comprises three (or more) local networks connected to a data network 2 and comprising respective Private Branch Exchanges PBX and Interface devices VTC.

In particular, the telecommunication system 40 comprises a VS-CH routing module of the communications within the data/phone interface network 31.

Basically, the VS-CH routing module acts as a network server capable of interpreting telephone signalling received from the telephone apparatuses of the telecommunication system 40, of processing them determining a routing of the connection towards a receiver apparatus and of controlling the apparatuses themselves.

Figure 4 indicates the paths of conventional phone signals TDM, for signalling and for VoIP telephony.

In particular, such a VS-CH routing module implements the following further steps of the management method for the configuration and maintenance of a data/phone interface network 31 of a telecommunication system 40 according to the invention:
collection of telephone signalling coming from the telephone apparatuses within the telecommunication system 40;
conversion of the telephone signalling into signalling on the data network;
interworking between different types of telephone signalling when apparatuses with different interfaces are present in the network;
management of the routing of the communications based upon the signalling received and upon routing algorithms configured according to the number and type of telephone apparatuses present in the network;
control of the network telephone apparatuses for the management of the opening and closing of phone channels present in the networks.

Advantageously, according to the invention, the VS-CH routing module allows the correct operation of the telecommunication system 40 and in particular the correct routing of the communications towards the telephone apparatuses connected within the telecommunication system 40 itself.

Figure 5 shows a further variant embodiment of the telecommunication system according to the invention, wholly indicated with 50.

As previously, the case of three (or more) local networks connected to a data network 2 and comprising respective Private Branch Exchanges PBX and Interface devices VTC is illustrated.

In particular, the telecommunication system 50 comprises a VS-CH routing module of the communications within the data/ phone interface network 31. Moreover, the telecommunication system 50 foresees a connection of the local networks also to the new Internet telephone service providers (ITSP).

In such a case, the VS-CH routing module also makes the connections between apparatuses inside the telecommunication system 50 and apparatuses outside of it, within a VoIP telephone network 51.

In particular, the VoIP telephone network 51 comprises suitable Gateway GW and Gatekeeper GW modules or Servers and is connected to VoIP or PC type telephone apparatuses, indicated as 52.

Advantageously, according to the invention, the VS-CH routing module also carries out the management of VoIP telephone signals coming from such a VoIP telephone network 51, as well as of the relative signalling, indicated in the figures with IP signalling.

Advantageously, according to the invention, the VS-CH routing module allows the correct operation of the telecommunication system 50 in which the local networks are also connected to new Internet telephone service providers ITSP.

The telecommunication system 50 is therefore an evolution in line with the recent developments in VoIP telephony and with the availability of the services of such Internet telephone service providers.

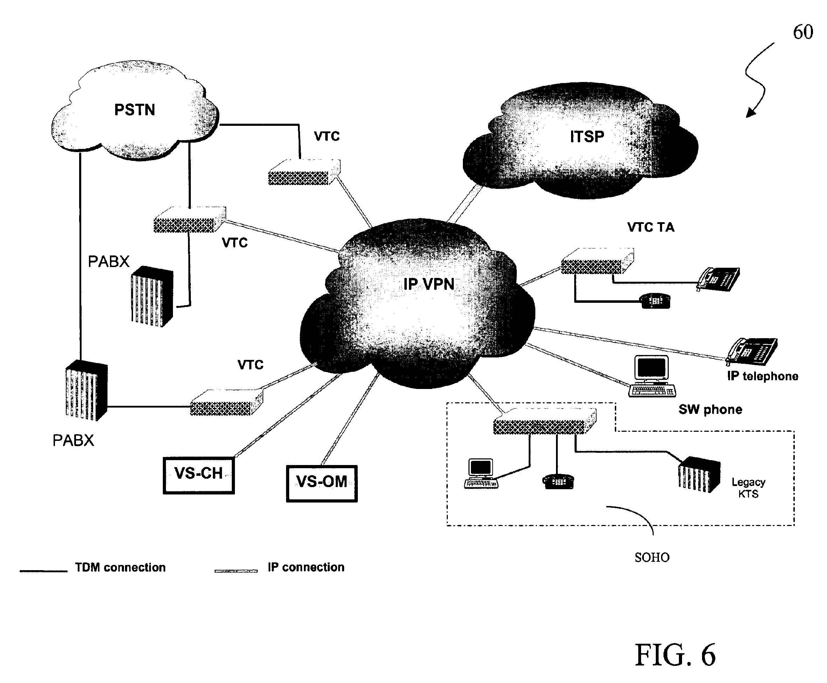

It is also possible to consider a further variant of the telecommunication system according to the invention that takes into account the frontiers of IP telecommunication, as schematically indicated in figure 6 and wholly indicated with 60.

In particular, the telecommunication system 60 comprises, as seen previously, a plurality of Interface devices VTC connected to a plurality of Private Branch Exchanges PBX and to an IP VPN data network, in turn connected to a VoIP telephone network.

Moreover, the telecommunication system 60 comprises new network elements such as:
IP terminals (like for example IP telephones);
Internet Access Devices IAD with gateway functions for access to telephony on the data network, like for example a personal computer with SW phone function;
residential networks with router connection, indicated as SOHO (Small Office, Home Office);
VTC TA terminal adapters (to connect conventional telephones to the IP network) and also
IP exchanges, in which all signalling and sound is treated according to technologies of data networks without the need for conventional telephone apparatuses any more.

Advantageously, according to the invention, the VS-OM management module and VS-CH routing module also allow the connection and management of such new network elements, maintaining a complete compatibility between them and increasing the overall functionalities of the network with the introduction of new services.

It is important to highlight the fact that, in a preferred embodiment, the telecommunication system according to the invention uses a proprietary protocol to carry out signalling within a private network. In such a way, it is possible to fully simplify the implementation of the network and allow, at least in particular configurations, complete transparency of signalling between different apparatuses, a thing that cannot be supported by standard protocols.

Moreover, advantageously, according to the invention, the telecommunication system has centralised application instruments to carry out the monitoring of the network, the maintenance and configuration of new apparatuses connected to it, pushing the natural evolution of the telecommunication system itself towards forefront technologies through a gradual and budgeted process.

## Claims

1. Telecommunication system for data/phone transmission within local or private geographic networks (S1, S2) connected to a data network (2) through local interconnections comprising telephone apparatuses (PBX, telephones, ...) and router devices, **characterised in that** it comprises at least one data/phone interface network (31), inserted between said local interconnections and including a plurality of interface devices (VTC) associated with each local or private geographic network (S1, S2) and connected between said telephone apparatuses (PBX, telephones, ...) and said router of said local interconnections, as well as at least one management module (VS-OM) of said plurality of interface devices (VTC) connected to at least one of said local interconnections, to configure and manage said telecommunication system.

2. Telecommunication system according to claim 1, **characterised in that** said management module (VS-OM) is connected to at least one of said local interconnections during the configuration of said telecommunication system.

3. Telecommunication system according to claim 1, **characterised in that** said management module (VS-OM) can be permanently connected to at least one of said local interconnections.

4. Telecommunication system according to claim 1, **characterised in that** said management module (VS-OM) carries out the following operations:
initial configuration of said interface devices (VTC) based upon the number and type of devices used; as well as
maintaining in operation said data/phone interface network (31).

5. Telecommunication system according to claim 1, **characterised in that** said interface devices (VTC) carry out conversion of a conventional phone signal coming from said telephone apparatuses (PBX, telephones, ...) into a data signal capable of being transported by said data network (2) and vice-versa.

6. Telecommunication system according to claim 1, **characterised in that** said interface devices (VTC) implement the following functions:
interface with said local connections (LAN, WAN, Internet);
conversion of conventional telephone signalling messages into signalling messages on IP network and vice-versa.

7. Telecommunication system according to claim 5, **characterised in that** said interface devices (VTC) use a proprietary protocol for signalling functions within said local networks (S1, S2).

8. Telecommunication system according to claim 6, **characterised in that** said interface devices (VTC) use a standard protocol for transmission outside said local networks (S1, S2).

9. Telecommunication system according to claim 6, **characterised in that** said interface devices (VTC) use a standard protocol for transmission inside said data network (2).

10. Telecommunication system according to claim 1, **characterised in that** it further comprises a routing module (VS-CH) connected to said data network (2) and to said plurality of interface devices (VTC), suitable for interpreting telephone signalling received from the telephone apparatuses (PBX, telephones, ...) through said interface devices (VTC), processing said signalling determining routing of a transmission towards a receiver apparatus and controlling said apparatuses.

11. Telecommunication system according to claim 10, **characterised in that** said management module (VS-OM) further carries out an initial configuration operation of said routing module (VS-CH) based upon the number and type of devices used.

12. Telecommunication system according to claim 10, **characterised in that** said routing module (VS-CH) uses protocols corresponding to the protocols used by said interface devices (VTC).

13. Telecommunication system according to claim 10, **characterised in that** said routing module (VS-CH) is further connected to a VoIP telephone network (51) and is suitable for managing VoIP telephone signals coming from said VoIP telephone network (51), as well as relative IP signalling.

14. Telecommunication system according to claim 1, **characterised in that** it further comprises VoIP telephone elements, such as:
IP terminals;
Internet access devices;
residential networks with router transmission;
terminal adapters; and
IP exchanges.

15. Telecommunication system according to claims 1 and 10, **characterised in that** said VoIP telephone elements are managed by said management and routing modules (VS-OM, VS-CH).

16. Telecommunication system according to any one of the previous claims, **characterised in that** said local or private geographical networks (S1, S2) are connected to a Public Switched Telephone Network (PSTN).

17. Management method of the transmission within local or private geographic networks (S1, S2) connected to a data network (2) through local interconnections (LAN, WAN, Internet) comprising a plurality of telephone apparatuses (PBX, telephones, ...) as well as a plurality of interface devices (VTC and VS-CH) within each local or private geographic network (S1, S2) and connected between said telephone apparatuses (PBX, 52) and said local connections (LAN, WAN, Internet) essentially comprising the steps of:
configuration of said interface devices (VTC and VS-CH); and
management of data/phone transmissions between said interface devices (VTC and VS-CH.)

18. Management method of the transmission according to claim 17, **characterised in that** said configuration step foresees the following steps:
- initialisation of the base software of said interface devices (VTC and VS-CH);
- collection of the setup parameters of said interface devices (VTC and VS-CH);
- definition of the transmissions between said interface devices (VTC and VS-CH) and said telephone apparatuses (PBX, 52);
- configuration of said interface devices (VTC and VS-CS) based upon said collection step.

19. Management method of the transmission according to claim 17, **characterised in that** said management step foresees the following steps:
- collection of the alarm signalling of said interface devices (VTC and VS-CH);
- modification of an operating status of said interface devices (VTC and VS-CH);
- dynamic insertion and removal of said interface devices (VTC and VS-CH);
- collection of statistical information on parameters linked to said transmissions;
- collection of traffic records information of said transmissions.

20. Management method of the transmission according to claim 17, **characterised in that** it further comprises the step of:
- updating software of said interface devices (VTC and VS-CH).

21. Management method of the transmission according to claim 17, **characterised in that** it further comprises the step of:
- updating a configuration of said interface devices (VTC and VS-CH) based upon said collection step of parameters.

22. Management method of the transmission according to claim 17, **characterised in that** it further comprises the steps of:
- collection of telephone signalling coming from said telephone apparatuses (PBX, 52);
- conversion of said telephone signalling into signalling on the data network;
- processing of different types of signalling when telephone apparatuses (PBX, 52) with different interfaces are present;
- management of routing of communications based upon said telephone signalling and upon routing algorithms configured according to the number and type of telephone apparatuses (PBX, 52);
- control of said interface devices (VTC and VS-CH) to manage the opening and/or closing of phone channels.

23. Management method of the transmission according to claim 17, **characterised in that** it further comprises the step of:
- management of VoIP telephone signals coming from a VoIP telephone network (51), as well as of relative signalling.
